# EUROPÄISCHE PATENTSCHRIFT

(11) **EP 0 483 904 B1**
(45) Veröffentlichungstag und Bekanntmachung des Hinweises auf die Patenterteilung: **14.08.1996**
(21) Anmeldenummer: 91202719.0
(22) Anmeldetag: 21.10.1991
(51) Int. Cl.: H04J 3/04, H04J 3/06

(54) **Demultiplexer für ein isochrones Multiplexsignal**
Demultiplexer for an isochronous multiplex signal
Démultiplexeur pour un signal multiplex isochrone

(30) Priorität: 29.10.1990 DE 4034354
(43) Veröffentlichungstag der Anmeldung: 06.05.1992
(73) Patentinhaber: Philips Patentverwaltung GmbH, 22335 Hamburg (DE); Philips Electronics N.V., 5621 BA Eindhoven (NL)
(72) Erfinder: Herzberger, Achim, Dipl.-Ing., W-8500 Nürnberg (DE); Presslein, Paul, Dipl.-Ing., W-8553 Ebermannstadt (DE)
(74) Vertreter: Volmer, Georg, Dipl.-Ing.

(56) Entgegenhaltungen:
- EP-A- 0 103 163
- EP-A- 0 386 828
- PATENT ABSTRACTS OF JAPAN vol. 10, no. 179 (E-414)(2235) 24. Juni 1986 & JP-A-61 29 226 (HITACHI) 10. Februar 1986

## Beschreibung

Die Erfindung betrifft einen Demultiplexer für ein isochrones Multiplexsignal, das aus blockweise verschachtelten, isochronen Teilsignalen besteht, mit wenigstens einem Schreib-Lese-Speicher, mit einer Schreib-Lese-Steuerung mit einem zyklisch laufenden Zähler zur Adressierung eines Schreib-Lese-Speichers und mit Mitteln zur bitweisen, seriellen Weiterleitung der Teilsignale auf einen Ausgang.

Eine Prinzipschaltung eines solchen Demultiplexers ist-zum Beispiel der DE-A-39 07 050 zu entnehmen. Bei der Realisierung eines solchen Demultiplexers gibt es mindestens zwei Möglichkeiten. Eine Möglichkeit besteht darin, den Demultiplexer aus Einzelbausteinen aufzubauen, die die gewünschte Funktion haben. Eine andere besteht darin, den Demultiplexer in integrierter Form in ECL-Technologie zu realisieren. Bei der zweiten Möglichkeit ist jedoch als Nebenbedingung darauf zu achten, daß zum Beispiel der Hersteller von Gate Arrays dem Anwender nur die Wahl läßt, in einem Katalog aufgeführte Bausteine zu verwenden. Zu solchen Bausteinen gehören unter anderem 8:1-Multiplexer, 4:1-Multiplexer, 2:1-Multiplexer, Latches sowie Flip-Flops mit acht, vier oder zwei Eingängen oder Latches und Flip-Flops mit einem Eingang.

Der Erfindung liegt die Aufgabe zugrunde, eine Schaltung der eingangs genannten Art unter Beachtung der erwähnten Nebenbedingung anzugeben, die sich durch geringen Leistungsbedarf und geringen Platzbedarf auf einem Chip auszeichnet.

Diese Aufgabe wird dadurch gelöst, daß im Schreib-Lese-Speicher durch vom zyklisch laufenden Zähler erzeugte Takte adressierbare Speichermittel zur blockweisen Speicherung der ankommenden Teilsignale vorgesehen sind, daß die Schreib-Lese-Steuerung zur Ausgabe der Ausgangssignale eines mehrstufigen Zählers und von Takten für die Speichermittel des Schreib-Lese-Speichers vorgesehen ist, daß zur Erzeugung der Takte für die Speichermittel des Schreib-Lese-Speichers in der Schreib-Lese-Steuerung wenigstens ein vom zyklisch laufenden Zähler adressierbarer Demultiplexer vorgesehen ist, daß eine Verteilungsmatrix zur Verteilung der in den Speichermitteln gespeicherten Bits auf mehrere erste Multiplexer vorgesehen ist, daß die Ausgänge des zyklisch laufenden Zählers in der Schreib-Lese-Steuerung zur Ausgabe von jeweils gleichen Adressen für jeden der ersten Multiplexer vorgesehen sind und daß ein zweiter vom zyklisch laufenden Zähler in der Schreib-Lese-Steuerung adressierbarer, zur Weiterverarbeitung der Bits der ersten Multiplexer dienender Multiplexer zur seriellen Weiterleitung der Teilsignale auf einen Ausgang vorgesehen ist.

Damit erzeugt die Schreib-Lese-Steuerung die Takte und Adressen für die internen Multiplexer und Speicher, in denen das ankommende isochrone Multiplexsignal blockweise gespeichert wird. Diese Steuersignale werden direkt oder indirekt von einem zyklisch laufenden Zähler in der Steuereinheit ausgegeben. Dabei werden die Ausgangssignale des Zählers den Multiplexern als Adresse zugeführt und mittels Adressierung von Demultiplexern zur Erzeugung von Impulsen auf den Taktleitungen für die Speichermittel des Schreib-Lese-Speichers verwendet. Der aus dem Stand der Technik bekannte 32:1-Multiplexer, der beim Auslesen der Speichermittel verwendet wird, wird bei der Erfindung durch eine geeignete Anordnung aus einer Verteilungsmatrix und mehreren Multiplexern nachgebildet. Für die Ausgabe eines isochronen Teilsignals STM4A auf eine abgehende Leitung wird das Teilsignal mit einem durch entsprechende Teilung aus dem Bittakt des eintreffenden seriellen Multiplexsignals erzeugten Auslesetakt synchronisiert. Dafür kann ein Flip-Flop verwendet werden. Verwendet man Latches als Speichermittel, so bringt das den Vorteil einer Platzersparnis und eines geringeren Energieverbrauchs.

Anhand eines Auführungsbeispiels und der Figuren soll die Erfindung näher erläutert werden.

Es zeigen:
Fig. 1 ein Blockschaltbild eines Demultiplexers,
Fig. 2 den inneren Aufbau eines der Blöcke nach Fig. 1,
Fig. 3 den inneren Aufbau einer Verteilungsmatrix,
Fig. 4 eine Steuereinheit zur Erzeugung von Taktsignalen,
Fig. 5 den Zeitverlauf von weiteren benötigten Takt- und Steuersignalen sowie von Ein- und Ausgangssignalen.

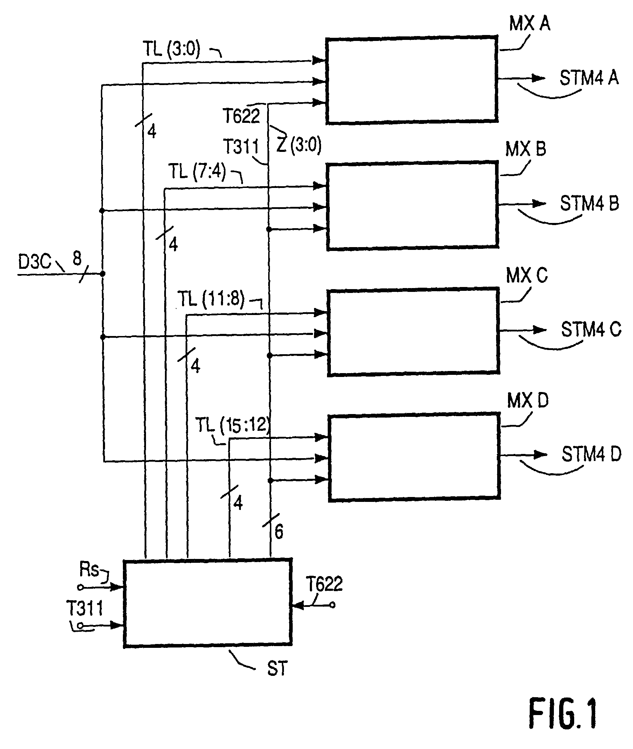

Die Fig. 1 dient der Übersicht. Auf einer Leitung D3C (im folgenden wird kein Unterschied zwischen dem Bezugszeichen für eine Leitung und dem für ein Signal gemacht, das auf dieser Leitung übertragen wird) werden acht parallele Bits eines ursprünglich seriellen STM-16-Signals (vergl. hierzu die CCITT-Empfehlungsentwürfe G 707, G 708 und G 709) den vier Funktionsblöcken MXA, MXB, MXC und MXD gleichzeitig zugeführt. In ihrer Gesamtheit bilden diese Funktionsblöcke den Schreib-Lese-Speicher des Demultiplexers. Die Ausgangssignale dieser Funktionsblöcke STM4A bis STM4D sind die vier isochronen Teilsignale, in die das isochrone Multiplexsignal zerlegt worden ist. Das Eingangssignal D3C ist byteweise vorsortiert, d.h., es folgen immer in der gleichen Reihenfolge aufeinander vier Bytes des ersten, des zweiten, des dritten und schließlich vier Bytes des vierten Teilsignals. Diese Vorsortierung der Bytes und die Zerlegung des ursprünglich seriellen Multiplexsignals in Bytes wird von einer hier nicht weiter erläuterten Synchronisierschaltung vorgenommen, die prinzipiell so gestaltet sein kann, wie die in der EP-A2-0 103 163 beschriebene Schaltung.

Zwei Taktperioden eines Bytetaktes T311 vor dem erstenByte des ersten Teilsingals, erhält eine Steuerschaltung ST einen Rücksetzimpuls Rs von der nicht gezeigten Synchronisierschaltung, mit der ein interner Zähler der Steuerschaltung ST (vergleiche weiter unten) auf Null gesetzt wird und der dann mit dem Bytetakt T311 weitergestellt wird. Von der Steuerschaltung ST werden nacheinander Taktimpulse auf Taktleitungen TL0 bis TL3 (abgekürzt TL(3:0)) gegeben, mit denen vier Bytes des ersten Teilsignals in den Funktionesblock MXA übernommen werden. Über Steuerleitungen T622, Z(3:0) und der Leitung T311 erhält der Funktionsblock MXA außerdem Takte und Adressen für interne Multiplexer und Speicher. Entsprechendes gilt für die Funktionsblöcke MXB, MXC und MXD sowie die weiteren drei Teilsignale mit Takten TL(7:4), TL(11:8) und TL(15:12). Alle Funktionsblöcke sind übrigens in der gleichen Weise aufgebaut. Der Bytetakt T311 und der Auslesetakt T622 werden durch entsprechende Teilung (durch 8, bzw. 4) aus dem Bittakt des eintreffenden seriellen Multiplexsignals (2,48832 GHz) von der nicht gezeigten Synchronisierschaltung erzeugt.

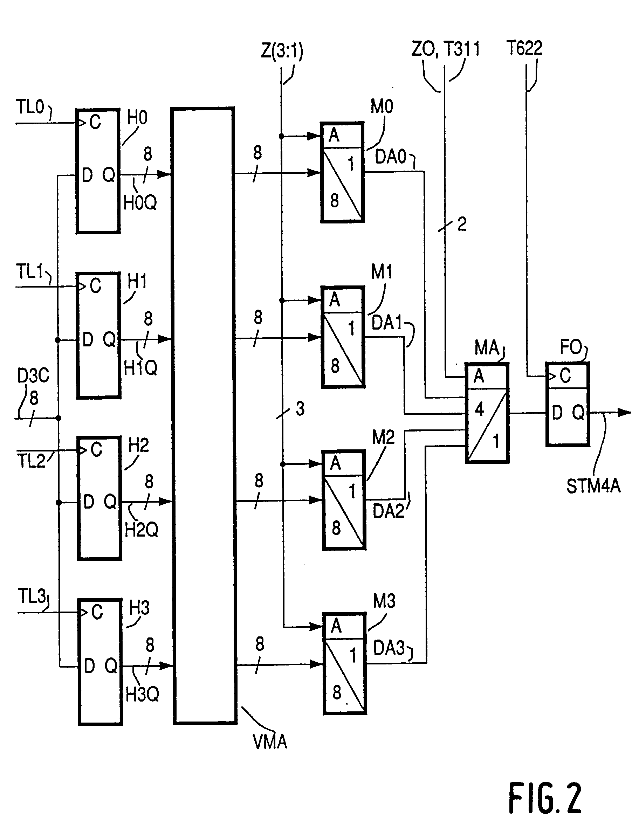

Fig. 2 zeigt im Detail den Funktionsblock MXA. Anhand der Bezugszeichen ist zu erkennen, wie die in Fig. 2 gezeigte Schaltung in die Übersichtsschaltung nach Fig. 1 einzuordnen ist. Mit den Takten TL0 bis TL3 werden nacheinander vier Bytes des Signals D3C in Latches H0 bis H3 übernommen. Die Verwendung von Latches anstatt Flip-Flops bringt den Vorteil einer Platzersparnis und den geringeren Energieverbrauchs, als auch geringerer Produktion von Verlustwärme.

Über eine Verteilungsmatrix VMA, deren genauer Aufbau weiter unten beschrieben wird, werden die insgesamt 32 Ausgänge HOQ is H3Q der Latches H0 bis H3 mit den insgesamt 32 Eingängen von vier 8:1 Multiplexern M0 bis M3 verbunden. Die Ausgänge der vier 8:1 Multiplexer sind auf die Eingänge eines 4:1 Multiplexers MA geführt, dessen Ausgangssignal mit einem Flip-Flop FO auf den Takt T622 (Bittakt der Teilsignale) synchronisiert wird. Die Verteilungsmatrix VMA und die Multiplexer M0 bis M3 sowie MA sind die Nachbildung eines 32:1 Multiplexers, der als selbständige Schaltung in dem oben erwähnten Katalog nicht enthalten ist.

Die Verteilungsmatrix VMA besteht lediglich aus leitenden, gelegentlich sich kreuzenden Verbindungen. Damit die Kreuzungen sich nicht stören, verlaufen die Verbindungen im Falle einer integrierten Schaltung in verschiedenen Verdrahtungsebenen des Chips.

Die Multiplexer M(3:0) und MA sind adressierbar. Über die Leitungen Z1, Z2 und Z3 laufen die Adressen für die Multiplexer M0 bis M3 und über die Leitungen Z0 und T311 die Adressen für den Multiplexer MA. Beim Anlegen einer Adresse an die Adresseingänge eines solchen Multiplexers wird ein durch die Adresse festgelegter Eingang mit dem Ausgang des Multiplexers leitend verbunden. Alle vier Multiplexer M0 bis M3 werden mit der gleichen Adressenfolge angesteuert. Diese Adressenfolge und die Verbindungen der Ausgänge der Latches H0 bis H3 mit den Eingängen der Multiplexer M0 bis M3 hängen voneinander ab und müssen daher aufeinander abgestimmt sein, wie nun im folgenden erläutert wird.

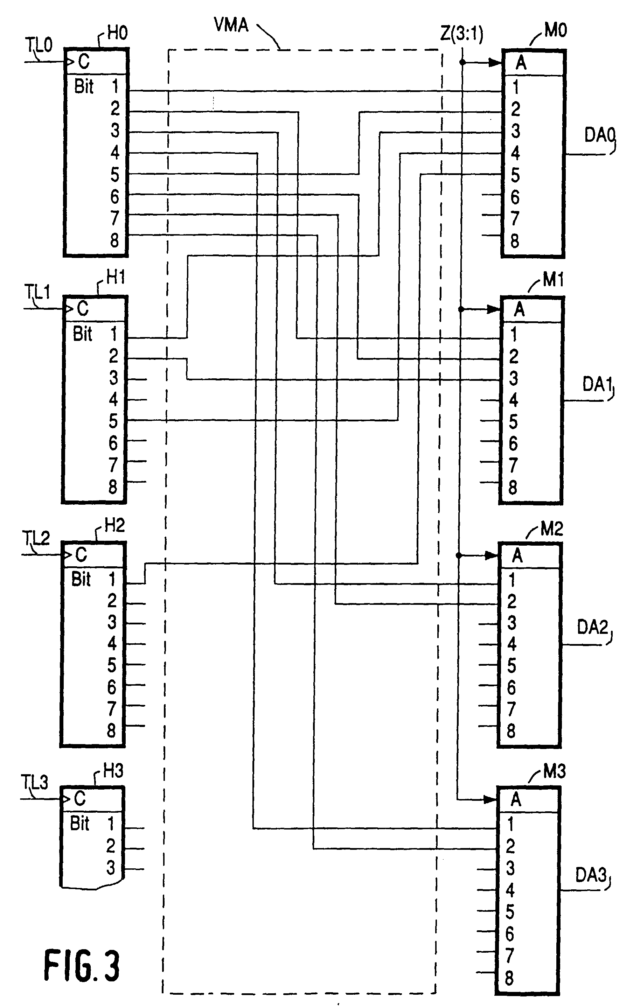

Das erste Byte des ersten Teilsignals ist im Latch H0 gespeichert. Das erste Bit dieses Bytes ist in der nach Fig. 2 obersten Speicherstelle (erste Speicherstelle) des Latches H0 gespeichert, das zweite in der darunter (zweite Speicherstelle) und sofort bis zum achten Bit, das in der untersten (achten Speicherstelle) des Latchs H0 gespeichert ist. In der angegebenen Reihenfolge müssen die Bits im Ausgangssignal STM4A erscheinen. Dazu wird jeweils der oberste (erste) Eingang der vier 8:1-Multiplexer M0 bis M3 mit dem ersten, zweiten, dritten bzw. vierten Ausgang des Latches H0 verbunden. Gleichesgilt für den zweiten Eingang der vier 8:1-Multiplexer M0 bis M3 und die restlichen vier Ausgänge des Latches H0. Auf entsprechende Art werden jeweils vier aufeinanderfolgende Eingänge der Latches H1 bis H3 mit den Eingängen gleicher Nummer der Multiplexer M1 bis M3 verbunden. Diese Verbindungen sind in der Verteilungsmatrix VMA nach Fig. 3 der besseren Übersicht halber nur angedeutet.

Werden bei dem beschriebenen Aufbau der Verteilungsmatrix VMA die 8:1-Multiplexer M0 bis M3 mit der Adresse angesteuert, durch die der erste Eingang mit dem Ausgang des Multiplexers verbunden wird, so liegen an den vier Eingängen des 4:1-Multiplexers MA die ersten vier Bits des ersten Byts an. Die Adressenfolge auf den Leitungen Z0 und T311 sorgt nun dafür, daß die Werte dieser ersten vier Bits nacheinander an den Dateneingang des Flip-Flop FO gelegt werden, das diese Wert dann synchronisiert auf den Bittakt T622 auf die Leitung STM4A weitergibt. Ist das geschehen, wechselt die Adresse auf den Adressleitungen Z(3:1), und zwar auf eine Adresse, die die zweiten Eingänge mit den Ausgängen der Multiplexer M0 bis M3 verbindet. Dann liegen die letzten vier Bits des ersten Bytes an den Eingängen des 4:1-Multiplexers MA an, die dann entsprechend den ersten vier Bits über die Leitung STM4A seriell weitergeleitet werden.

Entsprechende Verarbeitung findet dann mit den Bits der letzten drei Bytes statt; danach werden vier neue Bytes in die Latches H(3:0) geladen, deren Mutliplexbildung nach den gleichen Muster verläuft.

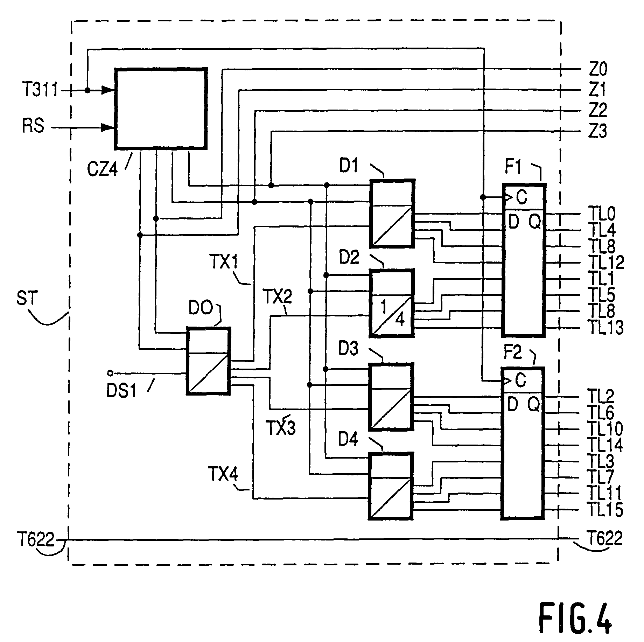

Die Takte und Adressen, die erforderlich sind, damit die Verarbeitung in der geschilderten zeitlich koordinierten Weise erfolgt, werden von der Steuerschaltung ST erzeugt, deren Einzelheiten die Fig. 4 zeigt. Wiederum lassen die Bezugszeichen für die Eingangs- und Ausgangsleitungen erkennen, wie die in Fig. 3 abgebildete Steuereinheit in die Übersichtsschaltung nach Fig. 1 einzuordnen ist.

Zentraler Baustein der Steuereinheit ST nach Fig. 4 ist ein zyklisch laufender vierstufiger Zähler CZ4, der durch den Rücksetzimpuls Rs auf Null gesetzt und der durch den Bytetakt T311 weitergestellt wird.

Die Ausgangssignale der vier Stufen des Zählers CZ4 sind die Signale Z0 bis Z3, die den Multiplexern M0 bis M3 und MA als Adressse zugeführt werden. In der Steuereinheit ST selbst werden sie als Adressen für 1:4-Demultiplexer D0 bis D4 verwendet, und zwar die Signale Z0 und Z1 als Adressen für den 1:4-Demultiplexer D0 und die Signale Z2 und Z3 als Adressen für die parallel adressierten Demultiplexer D1 bis D4. Mit den Demultiplexern D0 bis D4 werden Impulse auf die Ausgangsleitungen TL(15:0) verteilt. Die Taktleitung T622 ist durchgeschleift, da dieser Takt von der Steuerschaltung selbst nicht benötigt wird.

An den Eingang DS1 des Demultiplexers D0 ist eine Dauer eins angelegt, pyhsikalisch durch den hohen Spannungswert "HIGH" realisiert. Gesteuert durch die Signale Z0 und Z1 werden durch den Demultiplexer D0 (HIGH-) Impulse auf Leitungen TX1 bis TX4 verteilt, die wiederum der Reihe nach mit den Eingängen der Demultiplexer D1 bis D4 verbunden sind. Die sechzehn Ausgangssignale der Demultiplexer D1 bis D4 werden in jeweils einem Flip-Flop zwischengespeichert, um z.B. Spikes zu unterdrücken und jitterfreie Signale zu erhalten. Der Block F1 enthält acht Flip-Flops, die alle mit dem Takt T311 getaktet werden. Gleiches gilt für den Block F2.

Der Demultiplexer D1 erzeugt die Takte TL0, TL4, TL8 und TL12, der Demultiplexer D2 die Takte TL1, TL5, TL9 und TL13, der Demultiplexer D3 die Takte TL2, TL6, TL10 und TL14 und der Demultiplexer D4 die Takte TL3, TL7, TL11 und TL15.

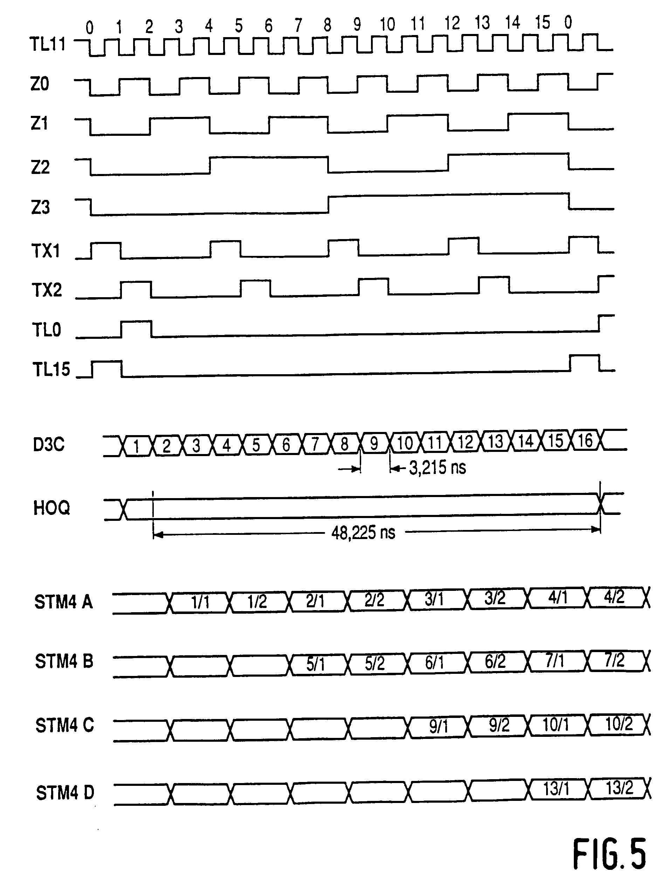

Um plausibler zu machen, daß die erzeugten Takte auch die benötigten sind, sind in Fig. 5 Zeitdiagramme der wichtigsten Steuersignale über der gleichen Zeitachse aufgetragen. Die gezeigten Impulsmuster wiederholen sich nach sechzehn Zähltakten für den vierstufigen Zähler CZ4. Der Zähltakt T311 ist im obersten Zeitdiagramm der Fig. 5eingetragen. Von ihm sind alle anderen Takte abgeleitet.

Seine fallenden Flanken, mit denen der Stand des Zählers CZ4 modulo 16 erhöht wird, sind durchnumeriert. Unter das Diagramm des Zähltaktes T311 sind zunächst die Ausgangssignale Z(3:0) der vier Stufen des Zählers CZ4 eingezeichnet. Danach kommen die Zwischensignale TX1 und TX2, die nach Fig. 4 Ausgangssignale des Demultiplexers D0 sind. Die Zwischensignale TX3 und TX4 sind gegenüber dem Signal TX2 um eine bzw. zwei Perioden des Taktes T311 verschoben und daher in Fig. 5 nicht eingetragen.

Gleiches gilt für die Steuersignale TL1 bis TL14, die gegenüber dem Takt TL0 um jeweils eine weitere Periode des Taktes T311 verschoben sind. Eigengetragen ist noch die letzte dieser Möglichkeiten, nämlich der Takt TL15.

Die nächste Zeile zeigt schematisch die durchnumerierten Bytes des Eingangssignals D3C. Die Zeitangabe von 3,215ns gilt für das STM-16-Signal.

Das folgende Diagramm zeigt schematisch das Signal H0Q am Q-Ausgang des Latches H0. Ein Wechsel der gespeicherten Daten ist an den Kreuzungspunkten möglich; Diese Punkte stimmen mit den steigenden Flanken des Taktes TL0 überein. Wegen der Steuerung eines Latches durch die Amplitude des Taktsignals sind die Daten nur zwischen den beiden senkrechten Markierungen stabil gespeichert, d.h. innerhalb eines Zeitraumes von 48,225ns für ein STM-16-Signal.

Die letzten vier Diagramme zeigen die Ausgangssignale STM4A bis STM4D. Schematisch sind Halbbytes angedeutet. Die erste Ziffer bedeutet die Nummer des Bytes innerhalb des Eingangssignals D3C und die Ziffer nach dem Schrägstrich deutet das erste oder das zweite Halbbyte an. Die Signale sind jeweils vier Perioden des Taktes T311 gegeneinander verzögert.

## Patentansprüche

1. Demultiplexer für ein isochrones Multiplexsignal (D3C), das aus blockweise verschachtelten, isochronen Teilsignalen besteht, mit wenigstens einem Schreib-Lese-Speicher (MXA, MXB, MXC, MXD), mit einer Schreib-Lese-Steuerung (ST) mit einem zyklisch laufenden Zähler (CZ4) zur Adressierung eines Schreib-Lese-Speichers und mit Mitteln zur bitweisen, seriellen Weiterleitung der Teilsignale auf einen Ausgang,
dadurch gekennzeichnet,
daß im Schreib-Lese-Speicher durch vom zyklisch laufenden Zähler erzeugte Takte adressierbare Speichermittel (H0, H1, H2, H3) zur blockweisen Speicherung der ankommenden Teilsignale vorgesehen sind,
daß die Schreib-Lese-Steuerung (ST) zur Ausgabe der Ausgangssignale eines mehrstufigen Zählers (CZ4) und von Takten (TL0..15) für die Speichermittel (H0, H1, H2, H3) des Schreib-Lese-Speichers (MXA, MXB, MXC, MXD) vorgesehen ist,
daß zur Erzeugung der Takte (TL0..15) für die Speichermittel des Schreib-Lese-Speichers in der Schreib-Lese-Steuerung wenigstens ein vom zyklisch laufenden Zähler (CZ4) adressierbarer Demultiplexer (D0, D1, D2, D3, D4) vorgesehen ist,
daß eine Verteilungsmatrix (VMA) zur Verteilung der in den Speichermitteln gespeicherten Bits auf mehrere erste Multiplexer (M0, M1, M2, M3) vorgesehen ist, daß die Ausgänge (Z1, Z2, Z3) des zyklisch laufenden Zählers (CZ4) in der Schreib-Lese-Steuerung (ST) zur Ausgabe von jeweils gleichen Adressen für jeden der ersten Multiplexer (M0, M1, M2, M3) vorgesehen sind,
daß ein zweiter vom zyklisch laufenden Zähler (CZ4) in der Schreib-Lese-Steuerung (ST) adressierbarer, zur Weiterverarbeitung der Bits der ersten Multiplexer dienender Multiplexer (MA) zur seriellen Weiterleitung der Teilsignale auf einen Ausgang (STM4A) vorgesehen ist.

2. Demultiplexer nach Anspruch 1,
dadurch gekennzeichnet,
daß die Speichermittel des Schreib-Lese-Speichers (MXA) als durch die Schreib-Lese-Steuerung (ST) adressierbare Latches (H0, H1, H2, H3) ausgebildet sind.

3. Demultiplexer nach Anpruch 1 oder 2,
dadurch gekennzeichnet,
daß zur Synchronisation der Teilsignale auf den Ausgangsleitungen (STM4A) extern getaktete Flip-Flops (FO) vorgesehen sind.

4. Demultiplexer nach Anspruch 1,
dadurch gekennzeichnet,
daß die Verteilungsmatrix (VMA) die Ausgänge der Speichermittel (H0, H1, H2, H3) mittels einer festen Verdrahtung derart mit den Eingängen der ersten Multiplexer verbindet, daß jeweils vier aufeinanderfolgende Ausgänge der Speichermittel (H0, H1, H2, H3) mit jeweils einem Eingang der gleichen Nummer der ersten Multiplexer verbunden sind.

5. Demultiplexer nach Anspruch 1,
dadurch gekennzeichnet,
daß die ersten Multiplexer (M0, M1, M2, M3) als 8:1-Multiplexer ausgeführt sind, deren Ausgänge mit den Eingängen eines zweiten als 4:1-Multiplexer ausgeführten Multiplexers (MA) verbunden sind.

## Claims

1. Demultiplexer for an isochronous multiplex signal (D3C) that consists of isochronous tributary signals interleaved block by block, the demultiplexer comprising at least a read-write memory (MXA, MXB, MXC, MXD), at least a read-write control (ST) with a cyclically running counter (CZ4) for addressing a read-write memory and comprising means for serially transporting tributary signals to an output, characterized in that the read-write memory includes storage means (H0, H1, H2, H3) which can be addressed by clocks generated by the cyclically running counter for storing the incoming tributary signals block by block, in that the read-write control (ST) produces the output signals of a multistage counter (CZ4) and clocks (TL0, ..., 15) for the storage means (H0, H1, H2, H3) of the read-write memory (MXA, MXB, MXC, MXD), in that the read-write control comprises at least one demultiplexer (D0, D1, D2, D3, D4) that can be addressed by the cyclically running counter (CZ4) which demultiplexer generates clocks (TL0, ..., 15) for the storage means of the read-write memory, in that a distribution matrix (VMA) is arranged for distributing the bits stored in the storage means over a plurality of first multiplexers (M0, M1, M2, M3), in that the outputs (Z1, Z2, Z3) of the cyclically running counter (CZ4) in the read-write control (ST) produce the same addresses for each one of the first multiplexers (M0, M1, M2, M3) and in that a second multiplexer (MA) serially transports the tributary signals to an output (STM4A), which second multiplexer is used for further processing the bits of the first multiplexer and can be addressed by the cyclically running counter (CZ4) in the read-write control (ST).

2. Demultiplexer as claimed in Claim 1, characterized in that the storage means (MXA) comprise latches (H0, H1, H2, H3) which can be addressed by the read-write control (ST).

3. Demultiplexer as claimed in Claim 1 or 2, characterized in that externally timed flip-flops (FO) are used for synchronization of the tributary signals on the output lines (STM4A).

4. Demultiplexer as claimed in Claim 1, characterized in that the distribution matrix (VMA) connects the outputs of the storage means (H0, H1, H2, H3) via a fixed wiring to the inputs of the first multiplexers so that each time four successive outputs of the storage means (H0, H1, H2, H3) are connected to a like-numbered input of the first multiplexers.

5. Demultiplexer as claimed in Claim 1, characterized in that the first multiplexers (M0, M1, M2, M3) are arranged as 8:1 multiplexers whose outputs are connected to the inputs of a second multiplexer (MA) arranged as a 4:1 multiplexer.

## Revendications

1. Démultiplexeur pour un signal multiplex isochrone (D3C) qui se compose de signaux partiels isochrones imbriqués par blocs avec au moins une mémoire vive (MXA, MXB, MXC, MXD), avec une commande d'écriture-lecture (ST), avec un compteur cyclique (CZ4) pour l'adressage d'une mémoire vive et avec des moyens pour la transmission sérielle par bits des signaux partiels sur une sortie,
caractérisé en ce que
dans la mémoire vive sont prévus des modules de mémoire (H0, H1, H2, H3) adressables par les rythmes produits par le compteur cyclique pour la sauvegarde par blocs des signaux partiels d'entrée,
la commande d'écriture-lecture (ST) est prévue pour la sortie des signaux de sortie d'un compteur à plusieurs étages (CZ4) et de rythmes (TL0...15) pour les modules de mémoire (H0, H1, H2, H3) de la mémoire vive (MXA, MXB, MXC, MXD),
pour la production des rythmes (TL0...15) pour les modules de mémoire de la mémoire vive dans la commande d'écriture-lecture, il est prévu au moins un démultiplexeur (D0, D1, D2, D3, D4) adressable par un compteur cyclique (CZ4),
une matrice de distribution (VMA) est prévue pour la distribution des bits sauvés dans les modules de mémoire sur plusieurs premiers multiplexeurs (M0, M1, M2, M3),
les sorties (Zl, Z2, Z3) du compteur cyclique (CZ4) sont prévues dans la commande d'écriture-lecture (ST) pour la sortie des mêmes adresses respectives pour chacun des premiers multiplexeurs (M0, M1, M2, M3),
un deuxième multiplexeur (MA) servant au traitement des bits du premier multiplexeur et adressable par le compteur cyclique (CZ4) dans la commande d'écriture-lecture (ST) est prévu pour la transmission sérielle des signaux partiels sur une sortie (STM4A).

2. Démultiplexeur selon la revendication 1,
caractérisé en ce que
les modules de mémoire de la mémoire vive (MXA) sont formés comme des bascules (H0, H1, H2, H3) adressables par la commande d'écriture-lecture (ST).

3. Démultiplexeur selon la revendication 1 ou 2,
caractérisé en ce que,
pour la synchronisation des signaux partiels sur les lignes de sortie (STM4A), sont prévues des bascules bistables à rythme externe (FO).

4. Démultiplexeur selon la revendication 1,
caractérisé en ce que
la matrice de distribution (VMA) relie les sorties des modules de mémoire (H0, H1, H2, H3) à l'aide d'un câblage fixe avec les entrées des premiers multiplexeurs de telle sorte que quatre sorties successives des modules de mémoire (H0, H1, H2, H3) soient respectivement reliées à une entrée du même numéro des premiers multiplexeurs.

5. Démultiplexeur selon la revendication 1,
caractérisé en ce que
les premiers multiplexeurs (M0, M1, M2, M2) sont conçus comme des multiplexeurs 8:1 dont les sorties sont reliées aux entrées d'un deuxième multiplexeur (MA) conçu comme un multiplexeur 4:1.
